# EUROPÄISCHE PATENTSCHRIFT

(11) **EP 0 895 802 B1**
(45) Veröffentlichungstag und Bekanntmachung des Hinweises auf die Patenterteilung: **06.10.2004**
(21) Anmeldenummer: 98112709.5
(22) Anmeldetag: 09.07.1998
(51) Int. Cl.: B01D 53/94, B01D 53/86, F01N 3/20

(54) **DeNOx-Katalyse**
DeNOx catalyst
Catalyse de NOx

(30) Priorität: 08.08.1997 DE 19734396
(43) Veröffentlichungstag der Anmeldung: 10.02.1999
(73) Patentinhaber: Volkswagen Aktiengesellschaft, 38436 Wolfsburg (DE)
(72) Erfinder: Jacobs, Pierre, 1755 Gooik (BE); Francis, Agna, 3891 Gingelom (BE); Jayat, François, 16170 Genac (FR); Martens, Johan, Prof., 3040 Huldenberg (BE)
(74) Vertreter: Pohlmann, Bernd Michael

(56) Entgegenhaltungen:
- EP-A- 0 362 483
- EP-A- 0 515 857
- EP-A- 0 666 099
- EP-A- 0 709 129
- WO-A-96/33796

## Beschreibung

Die Erfindung betrifft ein Verfahren zum Entfernen von Stickoxiden gemäß dem Oberbegriff des Patentanspruchs 1.

Zur Entfernung von Stickoxiden aus Verbrennungsabgasen sind mittlerweile eine Reihe von Strategien entwickelt worden. Verhältnismäßig einfach ist die Stickoxidentfernung bei Verbrennungsabgasen, die weniger als 1 % Sauerstoff enthalten, da hier das Gleichgewicht zu Gunsten der Reduktion leicht verschiebbar ist. Bei Abgasen, die Sauerstoff enthalten, ist insbesondere die selektive katalytische Reaktion (SCR) weit entwickelt, bei der ein Reduktionsmittel dem Abgasstrom zugesetzt wird. Als Reduktionsmittel kommen beispielsweise Ammoniak, Harnstoff oder Kohlenwasserstoffe zum Einsatz, wobei bei mobilen Brennkraftmaschinen insbesondere die letzteren geeignet sind. Bevorzugt findet der Kraftstoff Anwendung, der auch zum Betreiben der Brennkraftmaschine mitgeführt wird. Ein Überblick über solche Verfahren gibt SAE Technical Paper Series 900496 von Dr. Held et al, die übliche technische Umsetzung dieses Artikels beschreibt die DE 42 15 942 A.

Da insbesondere bei der Verwendung von Kohlenwasserstoffen (HC) bei der Katalyse auch eine Oxidation der HC als Neben- oder Hauptreaktion stattfinden kann (besonders bei Temperaturen oberhalb 200 ° C), sind solche Katalyseverfahren nur sehr bedingt für den Einsatz an verbrauchsoptimierten Verbrennungskraftmaschinen geeignet, d. h. insbesondere solchen mit zumindest zeitweiligem Anteil des Sauerstoffs im Abgasstrom ≥1 %.

Weiterhin ist bekannt, daß es bei der DeNOx-Reaktion von Vorteil ist, wenn das NO₂/NO-Verhältnis möglichst groß ist, da die NOx-Reduktion bevorzugt über das NO₂ verläuft. Es ist also wünschenswert, einen möglichst hohen Anteil des im Abgasstrom vorhandenen NO in NO₂ zu überführen, diese Reaktion läuft jedoch erst bei hohen Temperaturen (deutlich oberhalb 200 ° C) in einem nennenswerten Umfang ab. Die NOx-Reduktion mittels HC wird also bei niedrigen Temperaturen insbesondere durch einen Mangel an NO₂ (es liegt NO vor) und bei hohen Temperaturen, wenn NO₂ aus NO in nennenswertem Umfang gebildet wird, durch zunehmende direkte Oxidation des HC durch im Abgas vorhandenen Sauerstoff eingeschränkt. Weiterhin liegen im Abgas verbrauchsoptimierter Brennkraftmaschinen nur geringe Mengen an HC vor, so daß das chemische Reduktionspotential für die Reduzierung der gleichzeitig vorliegenden NOx-Mengen zu gering ist. Folglich werden in solchen Fällen für eine wirkungsvolle Reduktion der Stickoxide dem Abgasstrom Kohlenwasserstoffe stromaufwärts des Katalysators zugegeben.

Aus der EP 0 709 129 A1 ist bereits ein Verfahren zur Reduktion von NOx-Emissionen von einem magerlauffähigen Verbrennungsmotor bekannt, bei dem unter zyklischen Arbeitsbedingungen ein Puls von 20s Dauer ein Propen-NO-Ar-Gemisch in einen Reaktor eingeführt wird, dem ein Sauerstoffpuls derselben Länge folgt. Im Vergleich zu steadystate-Arbeitsbedingungen wurde eine bessere Entfernung des NOx beobachtet. Die zyklische Addition von Kohlenwasserstoffen erfolgt gemäß diesem Stand der Technik aus einer anderen Quelle als dem Verbrennungsmotor. Aus der WO 96/33 79 6 ist bereits ein Verfahren zur Herabsetzung einer NOx-Konzentration in einem magerem Abgas bekannt, bei dem ein Reduktionsmittel intermittierend dem Abgas zugeführt wird. Femer ist aus der EP 0 362 483 A1 ein Verfahren zur katalytischen Entstickung von Abgasen mittels eines Reduktionsmittels bekannt, bei dem über ein Dosierventil vor einem Katalysator Reduktionsmittel gepulst dem Abgas zugegeben wird. Zudem ist aus der EP 0 515 857 A1 ein Verfahren zur selektiven katalytischen Reduktion von Abgasen aus Kraftfahrzeug-Dieselmotoren bekannt, bei dem eine getaktete Zugabe von NH₃ oder NH₃-freisetzenden Stoffen erfolgt.

Aufgabe der vorliegenden Erfindung ist es, bei Brennkraftmaschinen mit einem zumindest zeitweiligen Sauerstoffanteil ≥ 1 % im Abgasstrom eine SCR des NOx durchzuführen, die bereits bei relativ tiefen Temperaturen wirksam sein soll.

Diese Aufgabe wird gelöst mit den Maßnahmen des Anspruchs 1.

Die Unteransprüche zeigen bevorzugte Ausführungsformen, mit denen insbesondere eine hohe NOx-Reduktion erreicht werden kann.

Wesentlich ist bei der vorliegenden Erfindung, daß die Zugabe des Reduktionsmittels - anders als im Stand der Technik - nicht kontinuierlich erfolgt, sondern diskontinuierlich. Wobei unter diskontinuierlich eine auf der Katalysatoroberfläche wirksame Schwankung des Reduktionsmittels zu verstehen ist, und nicht eine Schwankung der Reduktionsmittelzugabe mit hoher Frequenz, wie sie beispielsweise durch getaktete Dosiermittel, beispielsweise für die durchschnittliche Bemessung des Reduktionsmittels, oder durch eine Pumpendiskontinuität vorliegen kann. Solche höherfrequenten Schwankungen nivellieren sich im Abgasstrom, so daß am Katalysator im wesentlichen eine konstante Konzentration des Reduktionsmittels vorliegt. Durch die erfindungsgemäße Dosierstrategie ist es möglich, die DeNOx-Aktivität üblicher SCR-Katalysatoren vor allem zu niedrigen Temperaturen hin zu erhöhen und somit den Arbeitsbereich zu erweitern. Die pulsweise Zugabe von Kohlenwasserstoffen mit niedriger Pulsfrequenz, d. h. am Katalysator noch wirksamen Konzentrationsunterschieden, führt zu einem Anspringen des Katalysators bereits bei niedrigen Temperaturen. Dies geschieht vermutlich durch eine höhere Wirksamkeit der Bildung von NO₂ aus NO am Katalysator, wenn kein oder nur wenig HC und/oder NO₂ am Katalysator zugegen ist. D. h., der Reduktionsmittelpuls, insbesondere HC, baut das am Katalysator vorliegende NO₂ ab, in der Pulspause, in der dann weder NO₂ noch HC am Katalysator vorliegen, zumindest nicht in höheren Konzentrationen, wird dann am Katalysator wieder NO₂ aus NO gebildet, bis wieder ein NO-NO₂-Verhältnis am Katalysator eingespielt ist.

Das Verfahren wird anhand von Figuren näher beschrieben.

Es zeigen:

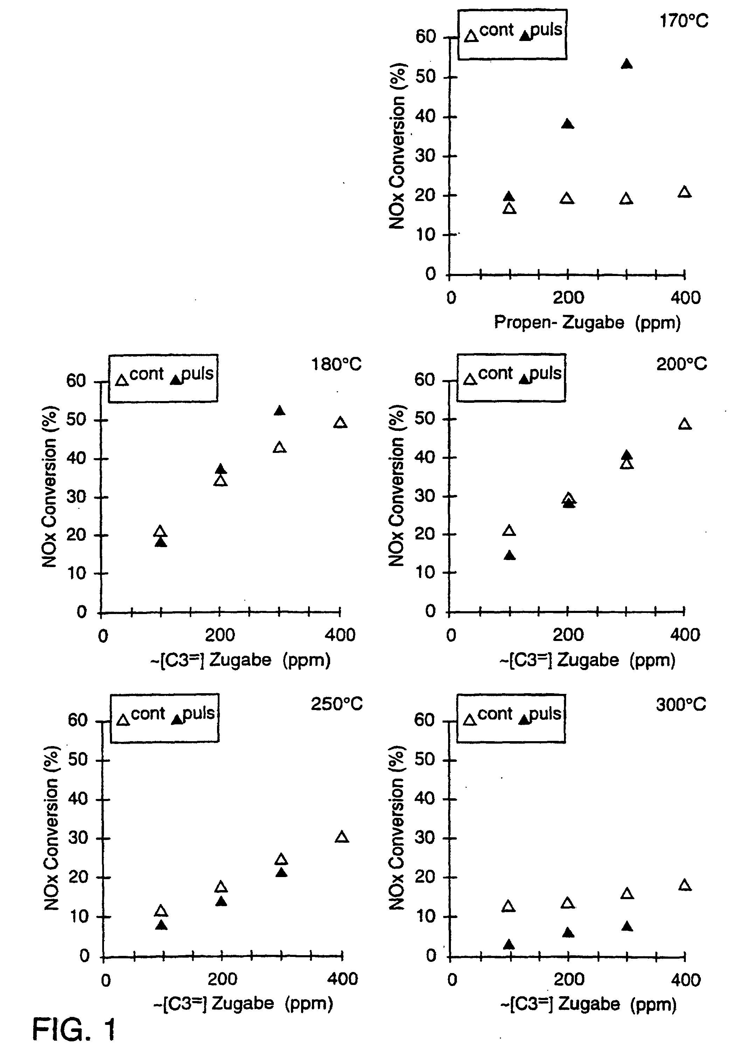

- Fig. 1: Konvertierungsraten bei unterschiedlichen Propenkonzentrationen; und
- Fig. 2: den Einfluß unterschiedlicher Impulspausen auf die NOx-Konvertierung.

Die Versuche wurden an einem Tieftemperaturkatalysator (H-Mordenit mit 1,5 % Platin) bei verschiedenen Temperaturen bei sowohl kontinuierlicher als auch pulsweiser HC-Zugabe durchgeführt. Die Eingangskonzentration der verwendeten Gasmischung war wie folgt:

| | |
|---|---|
| NO | 300 ppm |
| CO | 350 ppm |
| CO₂ | 12 % |
| O₂ | 6% |
| H₂O | 12 % |
| Helium | Rest |

Dieser Gasmischung wurde entweder kontinuierlich oder pulsweise jeweils mit der angegebenen Konzentration Propen zugegeben. Für den Bereich niedriger Temperatur (unter 200 °C) zeigt das Pulsverfahren deutliche Konvertierungsvorteile. Bei 170 °C wird für ein HC/NO-Verhältnis ≥ 1 bei kontinuierlicher Dosierung ein nahezu konstanter Umsatz von nur ca. 20 % gefunden, bei gepulster Dosierung des Propens liegt der Umsatz bei über 50 %. Bei 200 °C ist praktisch kein Unterschied zwischen dem Pulsbetrieb und dem kontinuierlichen Betrieb feststellbar, ab 250 °C und insbesondere bei 300 °C bringt die kontinuierliche Zugabe eine etwas höhere Konvertierungsrate. Hierbei ist jedoch zu berücksichtigen, daß der eingesetzte Katalysator ein Tieftemperaturkatalysator ist.

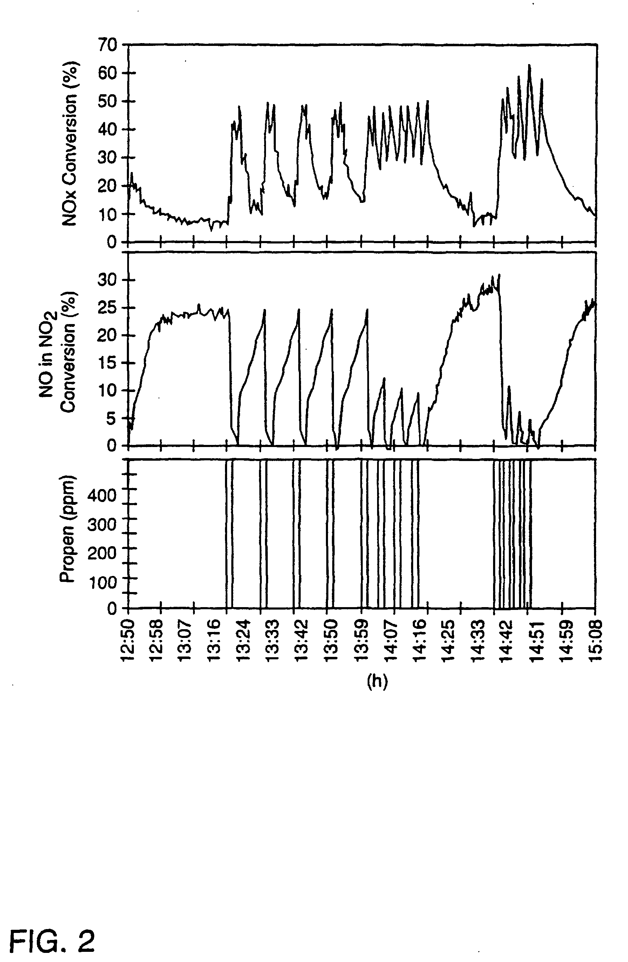

Aus Fig. 2 ist ersichtlich, daß bei fehlender Propenzugabe (bis 13:16) die Konvertierung von NO in NO₂ einen Wert von ca. 25 % erreicht. Gleichzeitig liegt die NOx-Umsetzung bei nur 10 %. Während eines Propenpulses über knapp 2,5 min steigt die NOx-Umsetzung auf 50 % an, wobei im Abgas nach dem Katalysator die NO₂-Konzentration gegen Null sinkt. In der darauffolgenden Pause steigt die NO₂-Konzentration im Abgas wieder an und die Gesamtkonvertierung sinkt wieder gegen 10 %. Mit zunehmender Pulsfrequenz (ab 13:59 und 14:42) sinkt die NO₂-Emission auf durchschnittlich geringe Werte, wohingegen die Gesamtkonvertierung auf durchschnittlich höhere Werte steigt, sogar bis ca. 50 %.

Das hier verwendete Propen/NO-Verhältnis liegt bei 1,6 und damit nicht oberhalb des kritischen Wertes, oberhalb dessen nur noch eine geringfügige Verbesserung der NOx-Konvertierung erwartet werden kann. Die Temperatur der Gaszusammensetzung liegt hier bei 170 °C, der Temperatur, bei der bei dauernder HC-Zugabe eine NOx-Konvertierung von weniger als 20 % erreicht wird, unabhängig von der HC-Konzentration.

## Patentansprüche

1. Verfahren zum Entfernen von Stickoxiden (NOx) aus Verbrennungsabgasen einer Verbrennungskraftmaschine, mit den Schritten:
- Führen der Verbrennungsabgase über einen Katalysator, der unter bestimmten Bedingungen geeignet ist, NOx in Gegenwart eines Reduktionsmittels zu reduzieren;
- Feststellen, ob die am Katalysator vorliegenden Bedingungen geeignet sind zur Reduktion des NOx mit dem Reduktionsmittel;
- Einspeisen des Reduktionsmittels stromaufwärts des Katalysators in die Verbrennungsphase in einer geeigneten Menge, bezogen auf eine in den Verbrennungsabgasen vorliegenden NOx-Menge, wenn festgestellt wurde, dass die geeigneten Bedingungen vorliegen:
- zeitweilig Verringern der Menge des eingespeisten Reduktionsmittels auf eine geringere als die geeignete Menge, während die geeigneten Bedingungen vorliegen
**dadurch gekennzeichnet, dass** das Reduktionsmittel ein Kraftstoff ist, der aus mindestens einem Zylinder der Brennkraftmaschine in das Abgas mit niedriger Pulsfrequenz, mit am Katalysator noch wirksamen Konzentrationsunterschieden in das Abgas gegeben wird.

2. Verfahren nach Anspruch 1, **dadurch gekennzeichnet, dass** die Menge des eingespeisten Reduktionsmittels um mindestens 50 %, insbesondere mindestens 80 % bis 100 % verringert wird, bezogen auf die geeignete Menge.

3. Verfahren nach einem der vorhergehenden Ansprüche, **dadurch gekennzeichnet, dass** das zeitweilige Verringern über mindestens 1 s, vorteilhaft mindestens 5 s und insbesondere mindestens 10 s erfolgt.

4. Verfahren nach einem der vorhergehenden Ansprüche, **dadurch gekennzeichnet, dass** das zeitweilige Verringern der geeigneten Menge des Reduktionsmittels für höchstens 2 min und insbesondere höchstens 1 min erfolgt.

5. Verfahren nach einem der vorhergehenden Ansprüche, **dadurch gekennzeichnet, dass** das Einspeisen des Reduktionsmittels in der geeigneten Menge über mindestens 5 s, vorteilhaft mindestens 15 s und insbesondere mindestens 30 s erfolgt.

6. Verfahren nach einem der vorhergehenden Ansprüche, **dadurch gekennzeichnet, dass** das Einspeisen des Reduktionsmittels in der geeigneten Menge über höchstens 10 min, vorteilhaft über höchstens 5 min und insbesondere über höchstens 3,5 min erfolgt.

7. Verfahren nach einem der vorhergehenden Ansprüche, **dadurch gekennzeichnet, dass** das zeitweilige Verringern der geeigneten Menge des Reduktionsmittels nur bei einer Abgastemperatur am Katalysator ≤ 300 °C und insbesondere ≤ 250 °C erfolgt.

8. Verfahren nach einem der vorhergehenden Ansprüche, **dadurch gekennzeichnet, dass** das Reduktionsmittel ein Kraftstoff ist, der zusätzlich nach den Zylindern in das Abgas gegeben wird.

9. Verfahren nach einem der vorhergehenden Ansprüche, **dadurch gekennzeichnet, dass** als Katalysator ein H-Mordenit, ein Zeolit und/oder SiO₂ eingesetzt wird, vorzugsweise mit einer Edelmetall-, insbesondere Platinbeladung, insbesondere im Bereich 0,3 bis 4 Gew.-%.

10. Verfahren nach einem der vorhergehenden Ansprüche, **dadurch gekennzeichnet, dass** das Reduktionsmittel erst eingespeist wird, wenn Bedingungen vorliegen, bei denen durch die Einspeisung des Reduktionsmittels mindestens 15 %, insbesondere mindestens 25 % des NOx zumindest zeitweilig reduziert werden.

11. Verfahren nach einem der vorhergehenden Ansprüche, **dadurch gekennzeichnet, dass** die geeignete Menge des Reduktionsmittels so bemessen ist, daß höchstens 30 % und insbesondere höchstens 20 % des Reduktionsmittels im Verbrennungsabgas nicht umgesetzt werden.

12. Verfahren nach einem der vorhergehenden Ansprüche, **dadurch gekennzeichnet, dass** die geeignete Menge des Reduktionsmittels bezogen auf die NOx-Menge derart bemessen ist, daß mit der Reduktionsmittelzugabe höchstens 90 % und insbesondere höchstens 80 % der möglichen NOx-Reduzierung erreicht wird, wobei die mögliche NOx-Reduzierung bei mindestens der dreifachen geeigneten Menge des Reduktionsmittels bestimmt wird.

13. Verfahren nach Anspruch 12, **dadurch gekennzeichnet, dass** die geeignete Menge des Reduktionsmittels bezogen auf die NOx-Menge derart bemessen ist, daß das Verhältnis Reduktionsmittel/NOx ≤ 2,50, insbesondere ≤ 1 ,8 ist.

14. Verfahren nach einem der vorhergehenden Ansprüche, **dadurch gekennzeichnet, dass** die geeignete Menge des Reduktionsmittels bezogen auf die NOx-Menge derart bemessen ist, daß das Verhältnis Reduktionsmittel/NOx ≥ 0,4, insbesondere ≥ 0,8 ist.

15. Verfahren nach einem der vorhergehenden Ansprüche, **dadurch gekennzeichnet, dass** bei einer hohen Abgastemperatur, insbesondere oberhalb 250 °C und vorteilhaft oberhalb 300 °C ein Hochtemperatur-SCR-Katalysator zumindest einen Teil der Stickoxide reduziert.

## Claims

1. Method for removing nitrogen oxides (NOₓ) from combustion exhaust gases from an internal combustion engine, comprising the steps of:
- passing the combustion exhaust gases over a catalyst, which under certain conditions is suitable for reducing NOₓ in the presence of a reducing agent;
- determining whether the conditions which are present at the catalyst are suitable for reducing the NOₓ using the reducing agent;
- feeding the reducing agent into the combustion phase upstream of the catalyst in a suitable quantity, based on a quantity of NOₓ which is present in the combustion exhaust gases, if it has been determined that the suitable conditions are present;
- temporarily reducing the quantity of reducing agent fed in to a quantity which is less than the suitable quantity while the suitable conditions are present;
**characterized in that** the reducing agent is a fuel which is introduced from at least one cylinder of the internal combustion engine into the exhaust gas at a low pulse frequency and with concentration differences in the exhaust gas still active at the catalyst.

2. Method according to Claim 1, **characterized in that** the quantity of reducing agent fed in is reduced by at least 50%, in particular at least 80% to 100%, based on the suitable quantity.

3. Method according to one of the preceding claims, **characterized in that** the temporary reduction takes place for at least 1 s, advantageously at least 5 s and in particular at least 10 s.

4. Method according to one of the preceding claims, **characterized in that** the temporary reduction in the suitable quantity of reducing agent takes place for at most 2 min and in particular at most 1 min.

5. Method according to one of the preceding claims, **characterized in that** the feeding-in of the reducing agent in the suitable quantity takes place for at least 5 s, advantageously at least 15 s and in particular at least 30 s.

6. Method according to one of the preceding claims, **characterized in that** the feeding-in of the reducing agent in the suitable quantity takes place for at most 10 min, advantageously for at most 5 min and in particular for at most 3.5 min.

7. Method according to one of the preceding claims, **characterized in that** the temporary reduction in the suitable quantity of reducing agent takes place only at an exhaust-gas temperature at the catalyst of ≤ 300°C and in particular ≤ 250°C.

8. Method according to one of the preceding claims, **characterized in that** the reducing agent is a fuel which is additionally added to the exhaust gas downstream of the cylinders.

9. Method according to one of the preceding claims, **characterized in that** the catalyst used is an H-mordenite, a zeolite and/or SiO₂, preferably laden with a precious metal, in particular platinum, in particular an amount in the range from 0.3 to 4% by weight.

10. Method according to one of the preceding claims, **characterized in that** the reducing agent is only fed in when conditions are such that feeding in the reducing agent will at least temporarily reduce at least 15%, in particular at least 25%, of the NOₓ.

11. Method according to one of the preceding claims, **characterized in that** the suitable quantity of reducing agent is such that at most 30%, and in particular at most 20%, of the reducing agent is not reacted in the combustion exhaust gas.

12. Method according to one of the preceding claims, **characterized in that** the suitable quantity of reducing agent, based on the quantity of NOₓ, is such that the addition of reducing agent achieves at most 90%, and in particular at most 80%, of the possible NOₓ reduction, the possible NOₓ reduction being determined with at least three times the suitable quantity of reducing agent.

13. Method according to Claim 12, **characterized in that** the suitable quantity of reducing agent based on the quantity of NOₓ is such that the reducing agent/NOₓ ratio is ≤ 2.50, in particular ≤ 1.8.

14. Method according to one of the preceding claims, **characterized in that** the suitable quantity of reducing agent based on the NOₓ quantity is such that the reducing agent/NOₓ ratio is ≥ 0.4, in particular ≥ 0.8.

15. Method according to one of the preceding claims,
**characterized in that** at a high exhaust gas temperature, in particular over 250°C and advantageously over 300°C, a high-temperature SCR catalyst reduces at least some of the nitrogen oxides.

## Revendications

1. Procédé pour éliminer les oxydes d'azote (NOx) des gaz d'échappement issus de la combustion d'un moteur à combustion interne, comprenant les étapes suivantes :
- guidage des gaz d'échappement issus de la combustion à travers un catalyseur qui est prévu, dans certaines circonstances, pour réduire les NOx en présence d'un agent réducteur ;
- détermination du caractère approprié ou non des conditions présentes au niveau du catalyseur en vue de la réduction des NOx avec l'agent réducteur ;
- injection de l'agent réducteur en amont du catalyseur dans la phase de combustion dans une quantité appropriée par rapport à une quantité de NOx existant dans les gaz d'échappement issus de la combustion, lorsqu'il a été déterminé que des conditions adéquates étaient réunies ;
- réduction temporaire de la quantité de l'agent réducteur injecté à une quantité inférieure à la quantité appropriée tant que les conditions adéquates sont réunies ;
**caractérisé en ce que** l'agent réducteur est un combustible qui est ajouté à partir d'au moins un cylindre du moteur à combustion interne dans le gaz d'échappement avec une faible fréquence de pulsation, avec des différences de concentration du gaz d'échappement encore effectives au niveau du catalyseur.

2. Procédé selon la revendication 1, **caractérisé en ce que** la quantité de l'agent réducteur injecté est réduite d'au moins 50 %, notamment d'au moins 80 % à 100 %, par rapport à la quantité appropriée.

3. Procédé selon l'une quelconque des revendications précédentes, **caractérisé en ce que** la réduction temporaire s'effectue pendant au moins 1 s, avantageusement pendant au moins 5 s et notamment pendant au moins 10 s.

4. Procédé selon l'une quelconque des revendications précédentes, **caractérisé en ce que** la réduction temporaire de la quantité appropriée de l'agent réducteur s'effectue pendant au plus 2 min et notamment pendant au plus 1 min.

5. Procédé selon l'une quelconque des revendications précédentes, **caractérisé en ce que** l'injection de l'agent réducteur en quantité appropriée s'effectue pendant au moins 5 s, de préférence au moins 15 s, et notamment au moins 30 s.

6. Procédé selon l'une quelconque des revendications précédentes, **caractérisé en ce que** l'injection de l'agent réducteur en quantité appropriée s'effectue pendant au plus 10 min, avantageusement au plus 5 min et notamment pendant au plus 3,5 min.

7. Procédé selon l'une quelconque des revendications précédentes, **caractérisé en ce que** la réduction temporaire de la quantité appropriée de l'agent réducteur n'a lieu que pour une température des gaz d'échappement dans le catalyseur ≤ 300°C et notamment ≤ 250°C.

8. Procédé selon l'une quelconque des revendications précédentes, **caractérisé en ce que** l'agent réducteur est un combustible qui est ajouté en plus après les cylindres dans le gaz d'échappement.

9. Procédé selon l'une quelconque des revendications précédentes, **caractérisé en ce que** l'on utilise comme catalyseur une H-mordénite, une zéolithe et/ou du SiO₂, de préférence avec une charge de métal noble, notamment de platine, notamment dans la plage de 0,3 à 4 % en poids.

10. Procédé selon l'une quelconque des revendications précédentes, **caractérisé en ce que** l'agent réducteur est seulement injecté lorsque des conditions sont réunies dans lesquelles, par l' injection de l'agent réducteur, au moins 15 %, notamment au moins 25 % des NOx sont réduits au moins temporairement.

11. Procédé selon l'une quelconque des revendications précédentes, **caractérise en ce que** la quantité appropriée de l'agent réducteur est dimensionnée de telle sorte que 30 % au plus, et notamment 20 % au plus de l'agent réducteur ne sont pas convertis en gaz d'échappement issu de la combustion.

12. Procédé selon l'une quelconque des revendications précédentes, **caractérisé en ce que** la quantité appropriée de l'agent réducteur par rapport à la quantité de NOx est dimensionnée de telle sorte qu'avec l'ajout de l'agent réducteur, au plus 90 % et notamment au plus 80 % de la réduction des NOx possible soit atteinte, la réduction des NOx possible étant déterminée pour au moins la quantité appropriée de l'agent réducteur multipliée par trois.

13. Procédé selon la revendication 12, **caractérisé en ce que** la quantité appropriée de l'agent réducteur par rapport à la quantité de NOx est dimensionnée de telle sorte que le rapport agent réducteur /NOx soit ≤ 2,50, notamment ≤ 1,8.

14. Procédé selon l'une quelconque des revendications précédentes, **caractérisé en ce que** la quantité appropriée de l'agent réducteur par rapport à la quantité de NOx est dimensionnée de telle sorte que le rapport agent réducteur/NOx soit ≥ 0,4, notamment soit ≥ 0,8.

15. Procédé selon l'une quelconque des revendications précédentes, **caractérisé en ce que** pour une température des gaz d'échappement élevée, notamment au-dessus de 250°C, et avantageusement au-dessus de 300°C, un catalyseur SCR à haute température réduit au moins une partie des oxydes d'azote.
